**Europäisches Patentamt**

**European Patent Office**

**Office européen des brevets**

(11) Veröffentlichungsnummer: **0 035 526**
**B1**

(12) **EUROPÄISCHE PATENTSCHRIFT**

(45) Veröffentlichungstag der Patentschrift: **28.11.84**

(21) Anmeldenummer: **80901714.8**

(22) Anmeldetag: **15.09.80**

(86) Internationale Anmeldenummer:
**PCT/CH80/00105**

(87) Internationale Veröffentlichungsnummer:
**WO 81/00745 19.03.81 Gazette 81/07**

(51) Int. Cl.³: **F 16 L 3/14**, F 16 B 2/08, H 02 G 3/26

(54) **EINRICHTUNG ZUM BEFESTIGEN VON LÄNGLICHEN INSTALLATIONSTEILEN - INSBESONDERE PROFILEN UND RÖHREN AUS KUNSTSTOFF.**

(30) Priorität: **14.09.79 CH 8316/79**

(43) Veröffentlichungstag der Anmeldung:
**16.09.81 Patentblatt 81/37**

(45) Bekanntmachung des Hinweises auf die Patenterteilung:
**28.11.84 Patentblatt 84/48**

(84) Benannte Vertragsstaaten:
**AT CH DE GB LI**

(56) Entgegenhaltungen:
**FR-A-2 209 909**
**FR-A-2 225 679**
**FR-A-2 313 620**
**US-A-1 398 294**
**US-A-3 575 367**

(73) Patentinhaber: **STAPRO AG**
**Moosstrasse 2**
**CH-6003 Luzern (CH)**

(72) Erfinder: **GABRIEL, Fredy**
**Ruopigenring 43**
**CH-6015 Reussbühl (CH)**

(74) Vertreter: **Feldmann, Paul David et al**
**c/o Patentanwaltsbüro FELDMANN AG Postfach**
**CH-8152 Glattbrugg (CH)**

Courier Press, Leamington Spa, England.

EP 0 035 526 B1

## Beschreibung

Die vorliegende Erfindung betrifft eine Einrichtung zum Befestigen von länglichen Installationsteilen — insbesondere von Profilen und Rohren — aus Kunststoff, bei der eine an einer Trägerplatte befestigte Bandschlaufe den Installationsteil teilweise umfasst und dass innerhalb der Bandschlaufe ein etwa den Querschnittabmessungen des Installationsteiles angepasster Einsatz angeordnet ist, der zusammen mit der Trägerplatte auf einem ortsfesten Stab angeordnet ist.

Einrichtungen der vorgenannten Art sind bekannt:

Bei der US—A—3.575.367 handelt es sich um eine Befestigungseinrichtung zur höhenverstellbaren Befestigung der Einrichtung an einem fest angeschweissten Zapfen. Die Einrichtung eignet sich zur Aufhängung von Metallrohren oder dergleichen, mit einer geringen Dehnung. Das zu befestigende Element wir durch eine Schlaufe des Bandes fest gegen einen Stossdämpferstoffblock gepresst. Wäre das zu befestigende Element ein Kunststoffrohr, würde zum einen die Dehnungsbewegung in diesem Fixpunkt unterbrochen und zum anderen eine Durchmesser-Vergrösserung verunmöglicht. Eine Knickung des Rohres wäre zwangsweise die Folge.

Gemäss der FR—A—23 13 620 sollen Rohre mit verschiedenen Durchmessern in einem an und für sich steifen Trägerelement gehalten werden. Dies erfolgt durch verschiedenartige Anpresselemente.

Zur Befestigung von Kunststoffrohren und Profilen wurde bisher dieselbe Befestigungstechnik verwendet, wie bei Metallrohren und Profilen. Dabei wurde insbesondere auf hohe Festigkeit geachtet und die Rohre beziehungsweise Profile wurden möglichst spielfrei gelagert. Dies war auch sinnvoll, konnten doch die durch Wärmeänderungen auftretenden Dehungsschwankungen annähernd vernachlässigt werden. Kunststoffrohre und Profile weisen jedoch einen wesentlich höheren Dehnungskoeffizienten auf, dem bis heute nicht Rechnung getragen wurde und häufig waren Knickungen der Kunststoffprofile oder Rohre die Folge. Der Erfinder hat diese Zusammenhänge erkannt und eine, den bis dahin bekannten Befestigungstechniken widersprechende Lösung vorgeschlagen. Diese besteht in einer Einrichtung gemäss Oberbegriff des Patentanspruches und ist dadurch gekennzeichnet, dass der Einsatz einen Führungsteil aufweist, der aus einem oder mehreren Blechplättchen bestehend, den Abmessungen sind der Form des Installationsteiles derart angepaßt ist, daß der Führungsteil zusammen mit der Bandschlaufe einen der jeweiligen Querschnittsform des länglichen Installationsteiles angepassten Durchgang definiert, durch den der Installationsteil mit Spiel geführt ist, so dass der Installationsteil ungehindert achsiale und radiale Dehnungsbewegungen ausüben kann.

Anstelle einer echten Fixierung wird somit eine Einrichtung vorgeschlagen, die durch das Zusammenwirken einer Bandschlaufe mit einer Trägerplatte und einem Einsatz mit Führungsteil eine Durchführung schafft, in der das Kunstoffrohr, beziehungsweise Profil zwar in der Höhenlage definiert, aber mit Spiel geführt wird. Somit kann nun der längliche Installationsteil sowohl achsiale, wie radiale Dehnungsbewegungen ungehemmt ausführen, trotzdem ist er in seiner Lage positioniert und gegen alle anderen Radialbewegungen mechanischer Art, wie Stösse, gesichert.

In der Zeichnung sind einige Ausführungsbeispiele des Erfindungsgegenstandes dargestellt und anhand der nachfolgenden Beschreibung erläutert.

Es zeigt:

Figur 1 eine Einrichtung mit getrennter Trägerplatte und Einsatz, in perspektivischer Darstellung.

Figur 2—4 drei weitere Ausführungsbeispiele, bei denen Trägerplatte und Einsatz aus einem Stück bestehen.

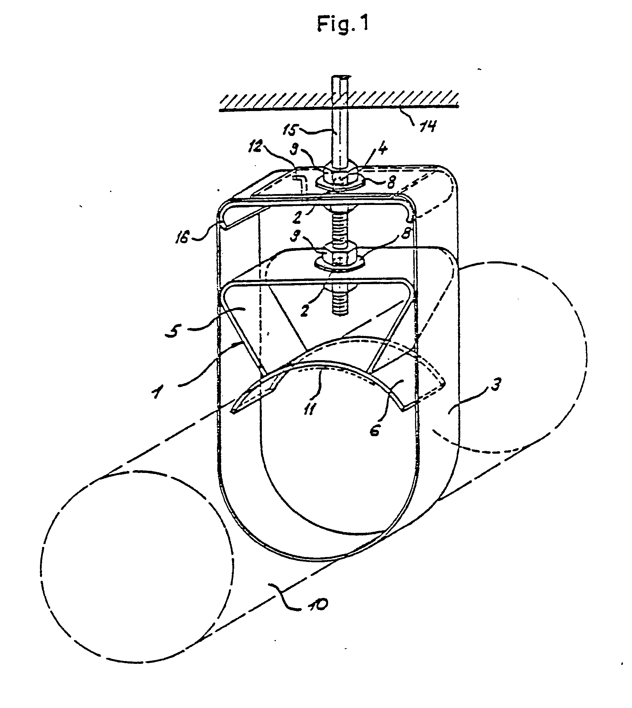

Die dargestellte Befestigungseinrichtung nach Figur 1 weist eine Bandschlaufe 3 mit einer Trägerplatte 16 auf, die so gebogen ist, dass die an seinen Enden angebrachten Oeffnungen 4 übereinander liegen. Ein Einsatz 1 besteht aus einem nach unten gerichteten U-förmigen Teil 5 der mit einem Führungsteil 6, einem Plättchen in der Form des zu befestigenden Installationsteiles 10, verbunden ist. Zwischen dem Führungsteil 6 und dem Installationsteil 10 besteht eine kleiner Zwischenraum 11. Der Einsatz 1 und die Trägerplatte 16 weisen Oeffnungen 2 auf, die mit den Oeffnungen 4 der Bandschlaufe auf einer Geraden liegen. Durch die Oeffnungen 4 der Bandschlaufe 3 und die Bohrungen in der Trägerplatte 16 und den Einsatz 1 ist ein am Tragkörper 14 befestigter ortsfester Stab 15 mit Gewinde geführt, an dem die Bandschlaufe 3 und der Einsatz 1, sowie die Trägerplatte 16 mit Unterlagsscheiben 8 und Muttern 9 — in der Lage verstellbar — befestigt sind. Für die Montage kann die Bandschlaufe 3 und die Trägerplatte 16 mit einem Stift 12 zusammengehalten werden.

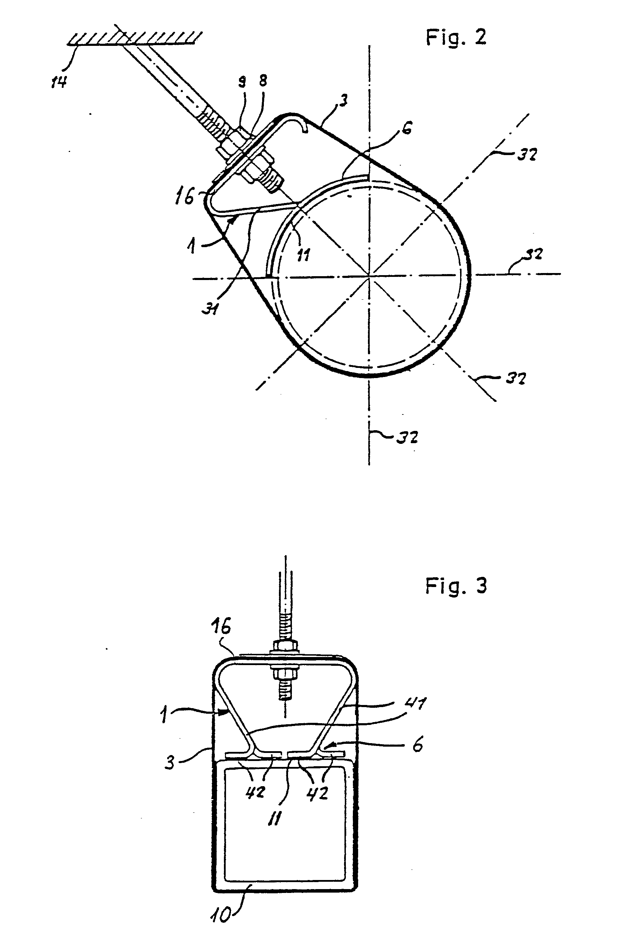

Das Ausführungsbeispiel nach Figur 2 zeigt einen Einsatz 1, der aus einem L-förmigen gebogenen Blechteil 31 besteht, dessen oberer Schenkel zugleich als Trägerplatte 16 dient, der die Bandschlaufe 3 stützt und deren anderer Schenkel mit einem Führungsteil 6 in Form eines gewölbten Plättchens verbunden ist. Die Befestigungseinrichtung kann in verschiedenen Neigungen 32 am Installationsteil 14 angebracht werden. Gleichbleibende Teile sind wie beim erst beschriebenen Ausführungsbeispiel gleich bezeichnet.

Beim Ausführungsbeispiel nach Figur 3, ist der Einsatz 1 mit dem Führungsteil 6 aus einem Stück abgebogen, indem die beiden Stege 41 des nach unten U-förmigen Einsatzes 1 im unteren Bereiche je in zwei Teilplättchen 42 aufgeschlitzt und jedes Teil 42 in entgegengesetzer Richtung dem Installationsteil 10 mit Spiel 11 angepasst abgebogen sind.

Die Teilplättchen 42 bilden gemeinsam den Führungsteil 6. Die obere Seite des Einsatzes 1 übernimmt hier wieder die Funktion der Trägerplatte 16.

Die Bandschlaufe 3 umfasst den rechteckigen Installationsteil 10 auf drei Seiten und hat die Form eines nach oben geschlossenen U. Zwischen dem Installationsteil 10 und dem Einsatz 1 verbleibt wieder das Spiel 11.

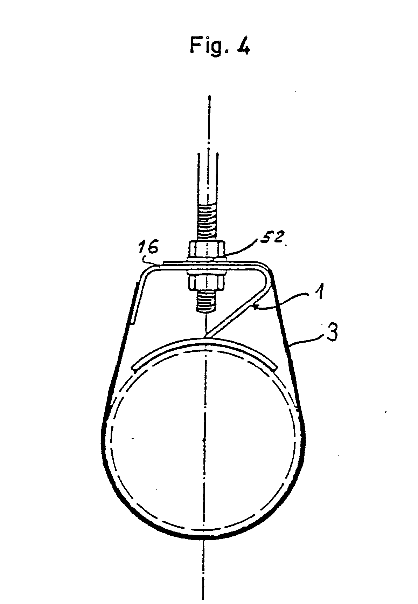

Nach Figure 4 ist eine Bandschlaufe 3 dargestellt, die an einem Ende nur eine Oeffnung 52 aufweist, während die Bandschlaufe anderseitig direkt am oberen Schenkel 16 des Einsatzes 1 der auch als Trägerplatte dient, seitlich befestigt ist.

**Patentansprüche**

1. Einrichtung zum Befestigen von länglichen Installationsteilen (10) — insbesondere von Profilen und Rohren-aus Kunststoff, bei der eine an einer Trägerplatte (16) befestigte Bandschlaufe (3) den Installationsteil teilweise umfasst und bei der innerhalb der Bandschlaufe ein etwa den Querschnittabmessungen des Installationsteiles (10) angepasster Einsatz (1) angeordnet ist, der zusammen mit der Trägerplatte (16) auf einem ortsfesten Stab (15) in der Lage verstellbar angeordnet ist, dadurch gekennzeichnet, dass der Einsatz (1) einen Führungsteil (6) aufweist, der aus einem oder mehreren Blechplättchen bestehend, den Abmessungen und der Form des Installationsteiles derart angepasst ist, dass der Führungsteil (6) zusammen mit der Bandschlaufe (3) einen der jeweiligen Querschnittsform des länglichen Installationsteiles angepassten Durchgang definiert, durch den der Installationsteil mit Spiel (11) geführt, ist, so dass der Installationsteil (10) ungehindert achsiale und radiale Dehnungsbewegungen ausüben kann.

2. Einrichtung nach Anspruch 1, dadurch gekennzeichnet, dass die Trägerplatte (16) und der Einsatz (1) einstückig ausgeführt ist.

**Revendications**

1. Dispositif pour la fixation de pièces d'installation oblongues (10) notamment de profilés et de tuyaux en matière plastique, dans lequel une bande de fixation (3) fixée à une plaque de support (16) entoure partiellement la partie d'installation à fixer et dans lequel, à l'intérieur de la bande de fixation, est disposée une pièce d'insertion (1) adaptée aux dimensions de section transversale de la partie d'installation (10), cette pièce d'insertion étant disposée, en commun avec la plaque de support (16), réglable en position, sur une tige à poste fixe (15), dispositif caractérisé en ce que la pièce d'insertion (1) présente une partie de guidage (6) consistant en une ou plusieurs plaquettes de tôle qui sont adaptées aux dimensions et à la forme de la partie d'installation, de telle sorte que la partie de guidage (6), en commun avec la bande de fixation (3) définisse un passage de traversée, adapté à la forme de section transversale de la partie d'installation oblongue en question, à travers lequel la partie d'installation (10) est guidée avec jeu (11), de telle sorte que ladite partie d'installation puisse effectuer sans gêne des déplacements de dilatation axiale et radiale.

2. Dispositif suivant la revendication 1, caractérisé en ce que la plaque de support (16) et la pièce d'insertion (1) sont constituées en une seule pièce.

**Claims**

1. A device for fixing oblong installation parts (10) — particularly plastic material profiles and tubes, in the case of which a loop band (3), secured to a bearing plate (16), partially encloses the installation part and in the case of which inside the the loop band there is disposed an insert (1) which is adapted approximately to the cross-sectional dimensions of the installation part (10) and together with the bearing plate (16) is disposed on a fixed rod (15) so that its position is displaceable, characterized in that the insert (1) has a guide part (6), which comprises one or more small sheet metal plates and is adapted to the dimensions and shape of the installation part in such a way that together with the loop band (3) the guide part (6) defines a passage which is adapted to the respective cross-sectional shape of the oblong installation part and through which the installation part is guided with play (11), so that the installation part (10) can exert axial and radial elongation movements unimpeded.

2. A device according to claim 1, characterized in that the bearing plate (16) and the insert (1) are formed in one piece.

## Fig. 1

Fig. 2

Fig. 3

Fig. 4